# EUROPÄISCHE PATENTSCHRIFT

(11) **EP 0 545 339 B1**
(45) Veröffentlichungstag und Bekanntmachung des Hinweises auf die Patenterteilung: **15.01.1997**
(21) Anmeldenummer: 92120411.1
(22) Anmeldetag: 30.11.1992
(51) Int. Cl.: B29C 33/36, B29C 49/00

(54) **Koppeleinrichtung für Formteilfolgen**
Coupling device for endless moulding circuits
Dispositif d'accouplement pour des circuits de moulage sans fin

(30) Priorität: 02.12.1991 DE 4139696
(43) Veröffentlichungstag der Anmeldung: 09.06.1993
(73) Patentinhaber: FRÄNKISCHE ROHRWERKE, GEBR. KIRCHNER GmbH & Co., D-97486 Königsberg (DE)
(72) Erfinder: Weppert, Rainer, W-8728 Hassfurt (DE); Henninger, Gerhard, W-8728 Hassfurt-Wülflingen (DE)
(74) Vertreter: Schwabe - Sandmair - Marx

(56) Entgegenhaltungen:
- EP-A- 0 087 854
- DE-A- 1 918 336
- US-A- 4 365 948

## Beschreibung

Die Erfindung betrifft eine Vorrichtung, insbesondere einen Corrugator mit wenigstens einer Folge von Formteilen, die entlang wenigstens einer durch eine Zwangsführung für die Formteile vorgegebenen Kurve umlaufen gemäß dem Oberbegriff des Patentanspruchs 1.

Eine derartige Vorrichtung ist beispielsweise aus der DE-C 17 53 625 bekannt und bildet den wesentlichen Teil eines sog. Corrugators, mit welchem Kunststoffschläuche in warmplastischem Zustand verformt werden, um beispielsweise Kunststoffwellrohre herzustellen. Die Formteile, die auch als Formbacken oder Matrizenhälften bezeichnet werden, sind hierbei in der Folge lose aneinandergereiht. Zwei derartige Folgen von Formteilen laufen in einer gemeinsamen Umlaufebene gegensinnig um und vereinigen sich so in einer geraden Arbeitsstrecke, daß sich jeweils zwei Formteile zur Ausbildung eines gemeinsamen Formhohlraums miteinander vereinigen, der den einlaufenden, warmplastischen Kunststoffschlauch entsprechend der Profilierung des Formhohlraums verformt.

Die lose Aneinanderreihung der einzelnen Formteile in einer geschlossenen Folge hat insbesondere die Vorteile, daß nur verhältnismäßig einfache Führungen für die Formteile insbesondere auf deren Rückkehrstrecke, also in entgegengesetzter Richtung zur Arbeitsstrecke, erforderlich sind. Darüber hinaus ist kein gesonderter Kettenantrieb für die einzelnen Formteile erforderlich, und die Formteile selbst können einfach ausgebildet sein.

Weitere Corrugatoren mit den besagten Formteilfolgen sind aus der EP-A-0 087 854, der DE-A-1 918 336 und der US-A-4,365,948 bekannt.

Als Antrieb für die Formteilfolgen dient ein zu Beginn der Arbeitsstrecke angeordneter Zahnstangenantrieb, der ein sich drehendes Zahnrad aufweist, welches gleichzeitig in zwei nebeneinanderliegende Formteile eingreift, die zu diesem Zweck mit einer entsprechenden Verzahnung versehen sind. Bei einer horizontal angeordneten Umlaufebene für die beiden Formteilfolgen befinden sich die Verzahnungen der Formteile entweder an deren Oberseite oder deren Unterseite, und das Antriebszahnrad ist dementsprechend oberhalb oder unterhalb der Arbeitsstrecke angeordnet.

Diese bewährte Anordnung hat noch den weiteren Vorteil, daß die Abnutzung in jeder der beiden Formteilfolgen im allgemeinen ungefähr gleich sein wird, so daß die ursprünglich bestehende Synchronisation zwischen den beiden Formteilhälften-Folgen auch dann gewährleistet ist, wenn in Folge der Abnutzung im Laufe der Zeit ein gewisses Spiel in der Antriebsverzahnung auftritt.

Vor Beginn der Produktion eines Kunststoffwellrohres ist der Corrugator normalerweise kalt und wird erst durch die von dem warmplastischen Kunststoffschlauch abgegebenen Wärme erwärmt (meist sogar so weit, daß während der laufenden Produktion die Formteile gekühlt werden müssen). Die in einer losen Folge aneinander gereihten Formteile dehnen sich aufgrund der Wärme aus, und daher muß vor der Rohrproduktion bei dem Corrugator ein größeres Spiel eingestellt werden, als zu einem Umlauf ohne Wärmeeinwirkung nötig wäre. Die optimale Einstellung des Spiels ist dann erreicht, wenn während des Laufes der Formteile ein normales, metallisches Ablaufgeräusch wahrnehmbar ist. Dagegen ist ein hartes, kräftig schlagendes Geräusch vernehmbar, wenn das Spiel zu klein oder zu groß eingestellt wurde. Darüber hinaus ist beim Einbau einer neu angefertigten Formteilfolge besonders zu beachten, daß vorab kein zu großes Spiel eingestellt wird, da hier noch Abnutzungs- und Glättungsvorgänge an den Abrollflächen stattfinden. Abgesehen von einer Beurteilung des Spiels der Formteile in Folge der Geräuschentwicklung läßt sich das Spiel auch durch die Stromaufnahme eines Elektromotors feststellen, der das Zahnrad des Primärantriebs dreht. Eine zu hohe Stromaufnahme deutet hierbei auf ein fehlerhaftes Spiel hin.

Es hat sich allerdings herausgestellt, daß Schwierigkeiten auftreten können, wenn lange Formteilfolgen mit besonders vielen Formteilen verwendet werden. Dies liegt daran, daß sich das Spiel einer Formteilfolge ja als Summe der Spiele sämtlicher Formteile ergibt, und daher steigt diese Summe mit wachsender Länge der Formteilfolge, d.h. (da die Länge der einzelnen Formteile standardisiert ist), mit wachsender Anzahl von Formteilen. Das gesamte Spiel der Formteilfolge darf üblicherweise nicht wesentlich mehr als beispielsweise (je nach Formteil und Antrieb) 2 mm betragen, da sich sonst beim Antrieb der Formteile Schwierigkeiten ergeben können. Hierbei ist zu beachten, daß bei einem Spiel von mehr als etwa 2,5 mm sogar Bruchgefahr bestehen kann.

Der vorliegenden Erfindung liegt daher die Aufgabe zugrunde, die bekannte Vorrichtung weiterzuentwickeln und eine Vorrichtung zur Verfügung zu stellen, bei welcher auch lange Formteilfolgen mit zahlreichen Formteilen eingesetzt werden können, ohne daß die voranstehend geschilderten Probleme auftreten.

Die Aufgabe wird gemäß der vorliegenden Erfindung durch eine Vorrichtung mit den im Patentanspruch 1 aufgeführten Merkmalen gelöst.

Vorteilhafte Ausführungsformen gehen aus den Unteransprüchen hervor.

Die Registriereinrichtung kann beispielsweise ein Tachogenerator sein, der vom Primärantrieb angetrieben wird, oder ein von einer Verzahnung der Formteile angetriebenes Zahnrad, das einen Tachogenerator treibt oder aber mechanisch an den Sekundärantrieb gekoppelt ist. Bei Verwendung eines Tachogenerators kann dessen Drehzahlsignal zur entsprechenden synchronen Ansteuerung eines Elektromotors, etwa eines Schrittmotors, für den Sekundärantrieb dienen. Es können auch mehrere Sekundärantriebe vorgesehen sein. Die Art der Synchronisierung ist grundsätzlich frei wählbar und kann etwa über elektrische Signale, eine mechanische Kopplung, oder über eine Kombination derartiger Maßnahmen erfolgen.

Bei einer vorteilhaften Ausgestaltung der Erfindung ist in wesentlicher Entfernung vom Primärantrieb in Umlaufrichtung an einem zweiten Ort eine Koppeleinrichtung vorgesehen, die mit der dort erfolgenden Bewegung der Formteile synchronisiert und zum dementsprechenden Antrieb der Formteile an einem in Umlaufrichtung zwischen der Koppeleinrichtung und dem Primärantrieb liegenden dritten Ort der Kurve ausgebildet ist.

Ein besonderer Vorteil einer derartigen Ausgestaltung ist darin zu sehen, daß die bislang übliche Ausbildung der Formteile, ihre Umlaufführung, und der Primärantrieb für die Formteile unverändert beibehalten werden können. Die zusätzliche Koppeleinrichtung sorgt dafür, daß sich am Ort des Primärantriebs nicht mehr das gesamte Spiel der gesamten Formteilfolge auswirkt, sondern höchstens die Summe des Spiels, welches zwischen dem ersten Ort und dem zweiten Ort auftritt, und des Spiels, welches zwischen dem dritten Ort und dem ersten Ort auftritt. Mit anderen Worten wirkt sich das in der Formteilfolge zwischen dem zweiten Ort und dem dritten Ort auftretende Spiel nicht mehr auf den Primärantrieb (am ersten Ort) aus.

Eine derartige Vorrichtung läßt sich besonders vorteilhaft bei einem eingangs beschriebenen Corrugator einsetzen, welcher zwei Folgen von Formteilen aufweist, die gemeinsam von dem Primärantrieb angetrieben werden und entlang einer gemeinsamen Arbeitsstrecke parallel zueinander derart laufen, daß sich jeweils zwei Formteile der einen bzw. der anderen Folge zu einer geschlossenen Hohlform vereinigen, wobei jede Folge von Formteilen eine ihr zugeordnete Koppeleinrichtung aufweist.

Vorzugsweise weisen die Formteile jeweils Eingriffsmittel zum Eingriff mit dem Primärantrieb auf, wie bei dem in der DE-C-17 53 625 beschriebenen Corrugator, und die Koppeleinrichtung weist einen zum Eingriff mit den Eingriffsmitteln der Formteile ausgebildeten Antrieb auf. Hierdurch wird eine sichere Synchronisation der Koppeleinrichtung mit der Formteilfolge erreicht.

In entsprechender Weise ist es weiterhin vorteilhaft, wenn auch der Abtrieb der Koppeleinrichtung, der an dem dritten Ort die Formteilfolge antreibt, zum Eingriff mit den Eingriffsmitteln der Formteile ausgebildet ist. Durch diese Maßnahmen stellt die Koppeleinrichtung praktisch einen passiven Hilfsantrieb für die Formteilfolge dar, welcher diese mit derselben Präzision antreibt wie der Primärantrieb.

Die Kopplung zwischen dem Antrieb und dem Abtrieb der Koppeleinrichtung ist zweckmäßigerweise einstellbar ausgebildet. Hierdurch kann beispielsweise der Abtrieb der Koppeleinrichtung, der die Formteilfolge antreibt, gegenüber dem von der Formteilfolge angetriebenen Antrieb der Koppeleinrichtung eine gewisse, einstellbare Voreilung oder einen entsprechenden Nachlauf aufweisen.

Vorzugsweise sind der Antrieb und der Abtrieb der Koppeleinrichtung miteinander mechanisch starr gekoppelt. Dies läßt sich zweckmäßigerweise etwa dadurch erreichen, daß der Antrieb ein in Verzahnungen der Formteile eingreifendes Stirnrad aufweist, das über eine Welle mit einem weiteren Stirnrad verbunden ist, das in Eingriff mit einem dritten Stirnrad steht, das über eine Welle mit einem dem Antriebs-Stirnrad entsprechenden Abtriebs-Stirnrad verbunden ist, welches die Formteile antreibt.

Ein besonders vorteilhafter Ort der Anbringung der Koppeleinrichtung ist etwa in der Mitte der geraden Arbeitsstrecke bzw. der Mitte der geraden Rücklaufstrecke der Formteilfolge. Dies ergibt sich, wenn der erste Ort (des Primärantriebs) und der zweite Ort (des Antriebs der Koppeleinrichtung) etwa ein Viertel der Kurvenlänge voneinander entfernt sind, und der zweite Ort und der dritte Ort (der Abtrieb der Koppeleinrichtung) etwa um die Hälfte der Kurvenlänge voneinander entfernt sind.

Zur Einstellung des Spiels weist die Zwangsführung vorzugsweise zumindest eine Einrichtung zur Einstellung des Spiels der Folge der Formteile auf.

Die vorliegende Erfindung ist, wie eingangs bereits erwähnt wurde, besonders vorteilhaft bei einem sog. Corrugator zur Herstellung von Kunststoffwellrohren einsetzbar. Hierauf ist der Einsatzbereich der erfindungsgemäßen Vorrichtung jedoch nicht beschränkt. Vielmehr läßt sich die Vorrichtung gemäß der vorliegenden Erfindung überall dort einsetzen, wo eine Folge von zahlreichen Formteilen umläuft, deren sich ergebendes Gesamtspiel möglicherweise zu groß werden könnte. Bei besonders langen Formteilfolgen könnte auch der Einsatz von mehr als einer Koppeleinrichtung bei einer Formteilfolge zweckmäßig sein.

Die Erfindung wird nachstehend anhand eines zeichnerisch dargestellten Ausführungsbeispiels näher erläutert, aus welchem sich weitere Vorteile und Merkmale ergeben.

Es zeigt:
- Fig. 1: eine schematisch stark vereinfachte Aufsicht auf zwei umlaufende Formteilfolgen, von denen die eine nur im Bereich ihrer Umlenkstrecken dargestellt ist;
- Fig. 2: einen vertikalen Querschnitt durch die in Fig. 1 dargestellte Anordnung mit einer Darstellung einer Koppeleinrichtung; und
- Fig. 3: einen horizontalen Schnitt durch die zentrale Achse M in Fig. 2.

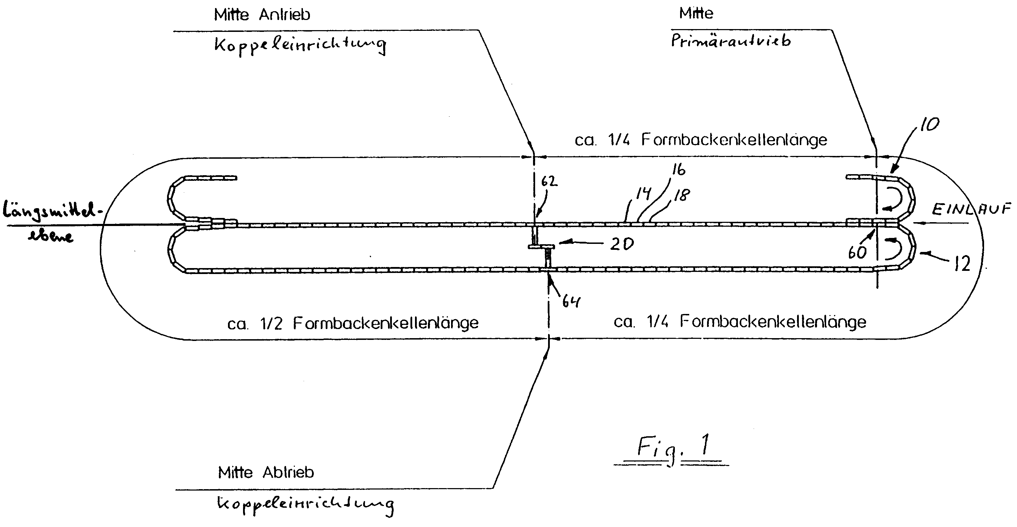

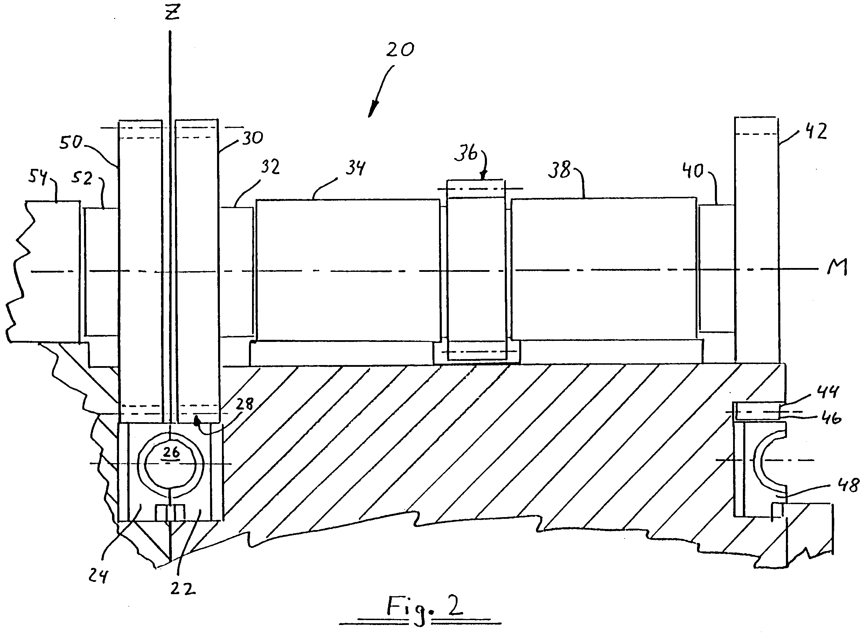

Bei der in Fig. 1 dargestellten Aufsicht ist eine nur an ihren Umlenkpunkten dargestellte Formteilfolge 10 gezeigt, die in der Figur als Formbakkenkette bezeichnet ist. Eine zweite Formbackenkette 12, von der beispielhaft drei Formbacken mit den Bezugsziffern 14, 16 und 18 bezeichnet sind, läuft im Gegensinn zur Formbackenkette 10 um. Vom rechts in Fig. 1 befindlichen Einlauf für den warmplastischen Kunststoffschlauch aus vereinigen sich die beiden Formbackenketten 10, 12 entlang einer geraden Arbeitsstrecke, wobei jeweils zwei Formbacken aneinander zur Anlage kommen und einen gemeinsamen Formhohlraum ausbilden (in Fig. 2 mit der Bezugsziffer 26 bezeichnet), dessen Profilierung die Form der Außenwand des herzustellenden Kunststoffrohrs festlegt.

Jede der in Fig. 1 dargestellten Formbackenketten besteht aus etwa 120 einzelnen Formbacken, 14, 16, 18 usw., die lose aneinanderliegen. Der (erste) Ort, an welchem der Primärantrieb zu Beginn der Arbeitsstrecke in jeweils zwei Formbacken eingreift, von denen die eine zur Formbackenkette 10 und die andere zur Formbackenkette 12 gehört, ist in Fig. 1 mit der Bezugsziffer 60 bezeichnet. Etwa in der Mitte der gemeinsamen Arbeitsstrecke der beiden Formbackenketten 10, 12 ist an einem zweiten Ort 62 der Antrieb für eine schematisch dargestellte Koppeleinrichtung 20 angeordnet, deren Abtrieb an einem dritten Ort 64 etwa auf der Hälfte der Länge der Rückkehrstrecke für die Formbackenkette 12 angeordnet ist und dort diese antreibt. Zum Zwecke einer vereinfachten Darstellung ist eine weitere Koppeleinrichtung für die erste Formbackenkette 10 nicht in Fig. 1 gezeigt, diese zweite Koppeleinrichtung wäre vorzugsweise symmetrisch zur ersten Koppeleinrichtung 20 anzuordnen.

Fig. 2 ist ein vertikaler Querschnitt durch die in Fig. 1 gezeigte Anordnung, und zwar am Ort der Koppeleinrichtung 20 mit Blickrichtung zum Einlauf hin. Mit dem Buchstaben Z ist in Fig. 2 die vertikale Längsmittelebene des in Fig. 1 dargestellten Corrugators bezeichnet.

Rechts von der Längsmittelebene Z befindet sich in Fig. 2 die Koppeleinrichtung 20 für die Formbackenkette 12, während links von der Symmetrieebene Z nur die ersten sich hieran anschließenden Teile einer zweiten Koppeleinrichtung für die andere Formbackenkette 10 dargestellt sind, deren weitere Teile zur Vereinfachung der Darstellung weggelassen sind.

In der Arbeitsstrecke vereinigen sich, wie voranstehend bereits erwähnt wurde, jeweils zwei Formbacken 24, 22 von der Formbackenkette 10 bzw. 12 und bilden einen gemeinsamen Hohlraum 26 aus, dessen Profilierung die Außenform des herzustellenden Kunststoffrohrs bestimmt. Oben auf den Formbacken ist jeweils eine Verzahnung nach Art eines Zahntriebs angebracht, beispielsweise eine Verzahnung 28 des in Fig. 2 gezeigten Formbackens 22, und in die Verzahnung 28 greift ein Stirnrad 30 der Koppeleinrichtung 20 ein und wird durch die Bewegung des Formbackens 22 und der nachfolgenden Formbacken in Drehung versetzt. Die Drehung wird über eine schematisch mit der Bezugsziffer 32 bezeichnete Welle, die an dem Stirnrad 30 befestigt ist und die in einem Lagerbock 34 gelagert ist, auf ein an der Welle 32 befestigtes Stirnrad 36 übertragen.

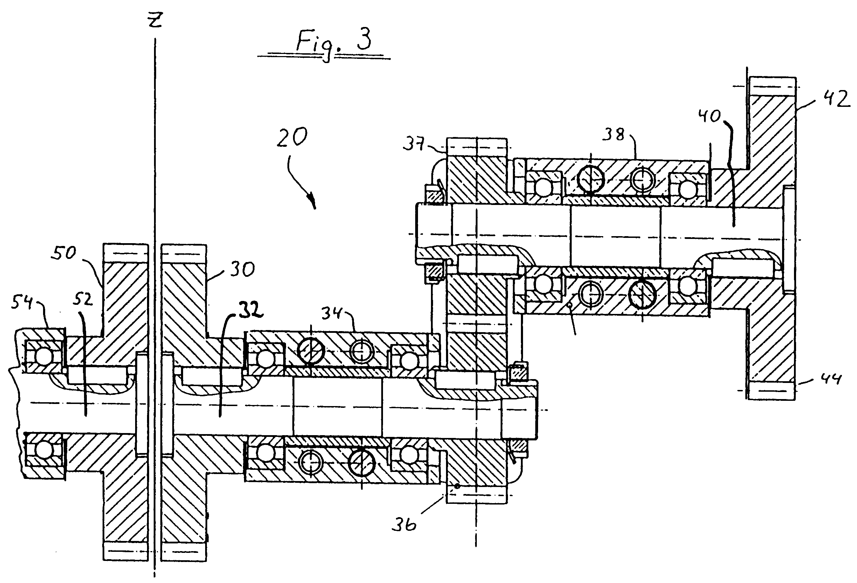

Wie aus dem horizontalen Schnitt durch die Koppeleinrichtung 20 gemäß Fig. 3 hervorgeht, kämmt das Stirnrad 36 mit einem weiteren Stirnrad 37, dessen Drehung über eine in einem Lagerbock 38 gelagerte Welle 40 auf ein mit dieser verbundenes Abtriebsstirnrad 42 übertragen wird. Die beiden Stirnräder 30 und 42 sind gleich ausgebildet, und die beiden Stirnräder 36 und 37 sind ebenfalls gleich ausgebildet, weisen jedoch einen geringeren Durchmesser und daher eine geringere Zähnezahl auf als die erstgenannten Stirnräder 30, 42. Hierdurch wird eine 1:1-Übersetzung vom Antriebsstirnrad 30 auf das Abtriebsstirnrad 42 erzielt.

Die Verzahnung 44 des Abtriebstirnrades 42 greift in die zahnstangenartige Verzahnung 46 eines Formbackens 48 ein, der sich auf der Rücklaufstrecke befindet, und treibt diesen synchron zur Bewegung des Formbackens 22 auf der Arbeitsstrecke an.

Entsprechend zu der ersten Koppeleinrichtung 20 ist links von der Symmetrieebene Z in Fig. 2 und 3 eine analog zur ersten Koppeleinrichtung 20 aufgebaute zweite Koppeleinrichtung dargestellt, von der in den Fig. 2, 3 allerdings die meisten Teile zur Vereinfachung der Darstellung weggelassen sind. Der Formbacken 24 treibt ein Antriebsstirnrad 50 der zweiten Koppeleinrichtung an, und die Drehung des Antriebsstirnrades 50 wird über eine Welle 52, die in einem Lagerbock 54 gelagert ist, an die weiteren Teile der zweiten Koppeleinrichtung übertragen.

Die mit der vorliegenden Erfindung erzielbaren Vorteile sollen nachstehend anhand eines praktischen Beispiels verdeutlicht werden. Wenn man annimmt, daß eine Formbackenkette mit ca. 60 Formbacken ein Spiel von insgesamt 2 mm aufweisen müßte, um beispielsweise die Längendifferenz zwischen dem kalten und dem warmen Zustand der Formbacken auszugleichen, so läge dieser Wert von 2 mm innerhalb des tolerierbaren Spiels von beispielsweise 2,5 mm, welches durch den Primärantrieb und die mit diesem zusammenwirkende Verzahnung oben auf den Formbacken vorgegeben ist; in einem derartigen Fall wäre keine Koppeleinrichtung erforderlich.

Wird nun jedoch eine Formbackenkette 12 eingesetzt, die die doppelte Anzahl von Formbacken aufweist, nämlich 120, so würde sich das ergebende Spiel dieser langen Formbackenkette auf ca. 4 mm erhöhen, und daher wesentlich über dem noch tolerierbaren Wert von 2,5 mm liegen. Das Spiel zwischen der Formbackenkette und dem Antrieb müßte daher entsprechend der Erwärmung nachgestellt werden (und bei Abkühlung entsprechend verringert werden). Hier setzt nunmehr die Koppeleinrichtung 20 ein, die an der in Fig. 1 gezeigten Stelle mit der Formbackenkette 12 zusammenwirkt.

Der (erste) Ort des Primärantriebes ist mit der Bezugsziffer 60 bezeichnet. Von dem ersten Ort 60 bis zum zweiten Ort 62, an welchem das Antriebsstirnrad 30 der Koppeleinrichtung 20 angeordnet ist, beträgt die Entfernung ca. ein Viertel der gesamten Formbackenkettenlänge von 120 Formbacken, also etwa 30 Formbacken. Diese 30 Formbacken benötigen ein maximales Spiel von etwa 1 mm. Durch die Zwangskopplung zwischen dem Ende des ersten Viertels der Formbackenkettenlänge und dem Anfang des letzten Viertels der Formbackenkettenlänge, welches an dem dritten Ort 64 durch das Abtriebsstirnrad 42 der Koppeleinrichtung 20 angetrieben wird, wird die Bewegung der Formbacken am zweiten Ort 62 praktisch spielfrei auf die Formbacken am dritten Ort 64 übertragen. Zwischen dem dritten Ort 64 und dem ersten Ort 60 des Primärantriebs sind wiederum nur ca. 30 Formbacken angeordnet, die daher für sich in analoger Weise nur ein Spiel von etwa 1 mm erfordern. Insgesamt ergibt sich daher am ersten Ort 60 des Primärantriebs ein maximales Gesamtspiel von 2 mm, nämlich 1 mm von dem ersten Viertel der Formbackenkettenlänge und 1 mm von dem letzten Viertel der Formbackenkettenlänge.

Das sich zwischen dem zweiten Ort 62 und dem dritten Ort 64 ergebende Spiel wirkt sich daher überhaupt nicht am ersten Ort 60 des Primärantriebs aus. Das erforderliche Spiel der halben Formbackenkettenlänge von ca. 60 Formbacken zwischen dem zweiten Ort 62 und dem dritten Ort 64 beträgt entsprechend etwa 2 mm, und ein derartiges Spiel liegt innerhalb des tolerierbaren Bereiches von maximal 2,5 mm, der für das Spiel zwischen dem Antriebsstirnrad 30 am zweiten Ort 62 und das Abtriebsstirnrad 42 am dritten Ort 64 zulässig ist (analog zu dem maximalen Spiel von 2,5 mm am ersten Ort 60 des Primärantriebs).

Bei einer noch längeren Formbackenkettenlänge könnte es sich als erforderlich erweisen, pro Formbackenkette mehr als eine Koppeleinrichtung vorzusehen.

Für einen arbeitsfähigen Corrugator wäre selbstverständlich auch für die entsprechend der Formbackenkette 12 ausgebildete Formbackenkette 10 eine der Koppeleinrichtung 20 entsprechende Koppeleinrichtung in entsprechender Anordnung erforderlich.

Über den eigentlichen Zweck der Erfindung, nämlich ein zu großes Spiel auszugleichen, hinaus hat sich herausgestellt, daß die vorliegende Erfindung auch bei kürzeren Formteilfolgen, bei denen sie wegen eines Spielausgleichs nicht nötig wäre, beträchtliche Vorteile aufweist. Dies liegt daran, daß durch den direkten Antrieb der Formteile (zwischen den Orten 64 und 60) der Auslaufbereich der Formteilfolge entlastet wird, so daß sich hieraus eine wesentlich höhere Laufruhe ergibt.

## Patentansprüche

1. Vorrichtung, insbesondere Corrugator, mit wenigstens einer, vorzugsweise zwei Folgen (10, 12) von Formteilen (14, 16, 18; 22, 24), die entlang wenigstens einer durch eine Zwangsführung für die Formteile vorgegebenen Kurve umlaufen, und mit einem an einem ersten Ort (60) der Kurven angeordneten Primärantrieb für die Formteile (14, 16, 18; 22, 24), **gekennzeichnet** durch die folgenden Merkmale:
a) wenigstens eine Einrichtung zur Registrierung der Bewegung der Formteile (14, 16, 18; 22, 24) zur selbsttätigen Erfassung der Bewegung der Formteile bzw. des Primärantriebes,
b) wenigstens ein Sekundärantrieb (42), der mittels der Registriereinrichtung zur Bewegung der Formteile bzw. zu dem Primärantrieb synchronisiert ist, ist in Umlaufrichtung hinter der Registrierungseinrichtung und vor dem Primärantrieb angeordnet;
c) der Sekundärantrieb wird in Abhängigkeit zu der von der Registrierungseinrichtung erfaßten Bewegung der Formteile bzw. des Primärantriebes in Gang gesetzt bzw. in Gang gehalten.

2. Vorrichtung nach Anspruch 1, dadurch gekennzeichnet, daß die Registriereinrichtung (30) Bestandteil einer Koppeleinrichtung (20) ist, die in wesentlicher Entfernung vom Primärantrieb in Umlaufrichtung an einem zweiten Ort (62) vorgesehen ist und die mit der dort folgenden Bewegung der Formteile synchronisiert ist und die Formteile (14, 16, 18; 22, 24) an einem in Umlaufrichtung zwischen Koppeleinrichtung (20) und Primärantrieb liegenden dritten Ort (64) der Kurve über den Sekundärantrieb antreibt.

3. Vorrichtung nach Anspruch 1 oder 2, dadurch gekennzeichnet, daß zwei Folgen von Formteilen (14, 16, 18; 22, 24) vorgesehen sind, die gemeinsam von dem Primärantrieb angetrieben werden und entlang einer gemeinsamen Arbeitsstrecke parallel zueinander derart laufen, daß sich jeweils zwei Formteile (22, 24) der einen bzw. der anderen Folge zu einer geschlossenen Hohlform (26) vereinigen, und daß jede Folge von Formteilen eine ihr zugeordnete Koppeleinrichtung aufweist.

4. Vorrichtung nach Anspruch 2 oder 3, dadurch gekennzeichnet, daß die Formteile (22) jeweils Eingriffsmittel (28) zum Eingriff mit dem Primärantrieb aufweisen, und daß die Koppeleinrichtung (20) einen zum Eingriff mit den Eingriffsmitteln (28) ausgebildeten Antrieb (30) aufweist.

5. Vorrichtung nach Anspruch 4, dadurch gekennzeichnet, daß der Sekundärantrieb (42) der Koppeleinrichtung (20) zum Eingriff mit den Eingriffsmitteln (46) der Formteile (48) ausgebildet ist.

6. Vorrichtung nach einem der Ansprüche 1 bis 5, dadurch gekennzeichnet, daß die Kopplung zwischen der Einrichtung und dem Sekundärantrieb einstellbar ist.

7. Vorrichtung nach einem der Ansprüche 4 bis 6, dadurch gekennzeichnet, daß der Antrieb (30) zum Eingriff mit den Eingriffsmitteln (28) und der Sekundärantrieb (42) der Koppeleinrichtung (20) miteinander mechanisch starr gekoppelt sind.

8. Vorrichtung nach Anspruch 7, dadurch gekennzeichnet, daß der Sekundärantrieb (42) der Koppeleinrichtung ein in Verzahnungen (28) der Formteile (22) eingreifendes Stirnrad (30) aufweist, das über eine Welle (32) mit einem Stirnrad (36) verbunden ist, das in Eingriff mit einem Stirnrad (37) steht, das über eine Welle (40) mit dem als ein Stirnrad (42) ausgebildeten Sekundärantrieb verbunden ist, welches die Formteile (48) andernorts antreibt.

9. Vorrichtung nach einem der Ansprüche 2 bis 8, dadurch gekennzeichnet, daß der erste Ort (60) und der zweite Ort (62) etwa 1/4 der Kurvenlänge voneinander entfernt sind, und daß der zweite Ort (62) und der dritte Ort (64) etwa die Hälfte der Kurvenlänge voneinander entfernt sind.

10. Vorrichtung nach einem der Ansprüche 1 bis 9, dadurch gekennzeichnet, daß die Zwangsführung zumindest eine Einrichtung zur Einstellung des Spiels der Folge der Formteile aufweist.

11. Vorrichtung nach einem der Ansprüche 1 bis 10, dadurch gekennzeichnet, daß die Registriereinrichtung als Tachogenerator ausgebildet ist, der insbesondere beim Primärantrieb angeordnet ist, und die Geschwindigkeit mißt.

12. Vorrichtung nach Anspruch 11, dadurch gekennzeichnet, daß der Sekundärantrieb einen Motor aufweist, der aufgrund des vor dem Tachogenerator aufgenommenen Geschwindigkeitssignals steuerbar ist.

## Claims

1. Device, in particular a corrugating device, comprising at least one, preferably two, endless sequences or trains (10, 12) of moulds (14, 16, 18; 22, 24) running along at least one curve determined by a restricted guidance for the moulds, and comprising a primary drive for the moulds (14, 16, 18; 22, 24) disposed on a first place (60) of the curves, **characterized** by the following features:
a) at least one means for registering the motion of the moulds (14, 16, 18; 22, 24) for the automatic detection of the motion of the moulds and/or the primary drive,
b) at least one secondary drive (42) which is synchronized by means of the registering means with the motion of the moulds and/or with the primary drive is arranged in circulating direction behind the registering means and in front of the primary drive;
c) the secondary drive is set going and/or sustained in dependence on the motion of the moulds and/or the primary drive, which motion is detected by the registering means.

2. Device according to claim 1, **characterized in** that the registering means (30) is part of a coupling means (20) which is provided in circulating direction at a second place (62) at an essential distance from the primary drive and which is synchronized with the motion following there of the moulds and is driving, via the secondary drive, the moulds (14, 16, 18; 22, 24) at a third place (64) of the curve, which in circulating direction lies between the coupling device (20) and the primary drive.

3. Device according to claim 1 or 2, **characterized in** that there are provided two endless sequences or trains of moulds (14, 16, 18; 22, 24), which are jointly driven by the primary drive and run along a joint working path in parallel to one another in such a way that always two moulds (22, 24) of one or the other trains are combined to form an enclosed hollow mold (26), and that each endless sequence or train of moulds comprises a coupling device allocated thereto.

4. Device according to claim 2 or 3, **characterized in** that the moulds (22) each comprise engaging means (28) for engaging with the primary drive, and that the coupling device (20) comprises a drive (30) designed for engagement with the engaging means (28).

5. Device according to claim 4, **characterized in** that the secondary drive (42) of the coupling device (20) is designed for engagement with the engaging means (46) of the moulds (48).

6. Device according to one of claims 1 to 5, **characterized in** that coupling between the device and the secondary drive can be adjusted.

7. Device according to one of claims 4 to 6, **characterized in** that the drive (30) for engagement with the engaging means (28) and the secondary drive (42) of the coupling device (20) are coupled with each other in a mechanically rigid manner.

8. Device according to claim 7, **characterized in** that the secondary drive (42) of the coupling device comprises a spur gear (30) engaging in toothed wheel work (28) of the moulds (22), which spur gear (30) is connected to a spur gear (36) via a shaft (32) which is in mesh with a spur gear (37) which is connected to the secondary drive designed as spur gear (42) via a shaft (40), which spur gear (42) drives the moulds (48) at another place.

9. Device according to one of claims 2 to 8, **characterized in** that the first place (60) and the second place (62) are spaced apart from one another by about 1/4 of the curve length, and that the second place (62) and the third place (64) are spaced apart from one another by about 1/2 of the curve length.

10. Device according to one of claims 1 to 9, **characterized in** that the restricted guidance comprises at least one means for adjusting the clearance of the endless sequence or train of the moulds.

11. Device according to one of claims 1 to 10, **characterized in** that the registering means is designed as a tachometer generator which is positioned especially in the primary drive and measures the speed.

12. Device according to claim 11, **characterized in** that the secondary drive comprises a motor which can be controlled on the basis of the speed signal recorded by the tachometer generator.

## Revendications

1. Dispositif, notamment machine à onduler, comprenant au moins une, de préférence deux séries (10, 12) d'éléments de moule (14, 16, 18, 22, 24) qui circulent le long d'au moins une courbe imposée aux éléments de moule par un guidage forcé, et un entraînement primaire pour les éléments de moule (14, 16, 18 ; 22, 24) disposé en un premier point (60) des courbes, **caractérisé en ce** qu'il présente les particularités suivantes :
a) au moins un dispositif pour l'enregistrement du mouvement des éléments de moule (14, 16, 18 ; 22, 24) en vue de la détection automatique du mouvement des éléments de moule et respectivement de l'entraînement primaire,
b) au moins un entraînement secondaire (42) synchronisé au moyen du dispositif d'enregistrement avec le mouvement des éléments de moule et respectivement avec l'entraînement primaire, est disposé dans la direction de circulation, en aval du dispositif d'enregistrement et en amont de l'entraînement primaire ;
c) l'entraînement secondaire est mis en marche et respectivement maintenu en marche en fonction du mouvement des éléments de moule et respectivement de l'entraînement primaire détecté par le dispositif d'enregistrement.

2. Dispositif selon la revendication 1, caractérisé en ce que le dispositif d'enregistrement (30) fait partie d'un dispositif d'accouplement (20) qui est prévu, à une distance notable de l'entraînement primaire dans la direction de circulation, en un deuxième point (62) et synchronisé avec le mouvement consécutif des éléments de moule et qui entraîne les éléments de moule (14, 16, 18 ; 22, 24), par l'intermédiaire de l'entraînement secondaire, en un troisième point (64) de la courbe situé dans la direction de circulation entre le dispositif d'accouplement (20) et l'entraînement primaire.

3. Dispositif selon la revendication 1 ou 2, caractérisé en ce qu'il comprend deux séries d'éléments de moule (14, 16, 18 ; 22, 24) qui sont entraînées simultanément par l'entraînement primaire et se déplacent parallèlement l'une par rapport à l'autre le long d'une voie de travail commune, de telle façon que respectivement deux éléments de moule (22, 24) de l'une et respectivement de l'autre série se réunissent en un moule creux (26) fermé, et que chaque série d'éléments de moule comporte un dispositif d'accouplement qui lui est associé.

4. Dispositif selon la revendication 2 ou 3, caractérisé en ce que les éléments de moule (22) comportent à chaque fois des moyens de prise (28) pour l'engrènement avec l'entraînement primaire, et que le dispositif d'accouplement (20) comprend un entraînement (30) pour l'engrènement avec les moyens de prise (28).

5. Dispositif selon la revendication 4, caractérisé en ce que l'entraînement secondaire (42) du dispositif d'accouplement (20) est conçu pour l'engrènement avec les moyens de prise (46) des éléments de moule (48).

6. Dispositif selon l'une des revendications 1 à 5, caractérisé en ce que l'accouplement entre le dispositif et l'entraînement secondaire est réglable.

7. Dispositif selon l'une des revendications 4 à 6, caractérisé en ce que l'entraînement (30) pour l'engrènement avec les moyens de prise (28) et l'entraînement secondaire (42) du dispositif d'accouplement (20) sont solidarisés mécaniquement.

8. Dispositif selon la revendication 7, caractérisé en ce que l'entraînement secondaire (42) du dispositif d'accouplement comporte une roue cylindrique (30) qui s'engrène dans des dentures (28) des éléments de moule (22) et est couplée par l'intermédiaire d'un arbre (32) avec une roue cylindrique (36) qui est en prise avec une roue cylindrique (37) laquelle est couplée par l'intermédiaire d'un arbre (40) avec l'entraînement secondaire conformé en roue cylindrique (42) qui entraîne les éléments de moule (48).

9. Dispositif selon l'une des revendications 2 à 8, caractérisé en ce que le premier point (60) et le deuxième point (62) sont éloignés l'un de l'autre d'environ 1/4 de la longueur de la courbe, et que le deuxième point (62) et le troisième point (64) sont éloignés l'un de l'autre d'environ la moitié de la longueur de la courbe.

10. Dispositif selon l'une des revendications 1 à 9, caractérisé en ce que le guidage forcé comprend au moins un dispositif pour le réglage du jeu de la série des éléments de moule.

11. Dispositif selon l'une des revendications 1 à 10, caractérisé en ce que le dispositif d'enregistrement est conformé en générateur tachymétrique lequel est monté notamment sur l'entraînement primaire et mesure la vitesse.

12. Dispositif selon la revendication 11, caractérisé en ce l'entraînement secondaire comprend un moteur qui peut être commandé en fonction du signal de vitesse enregistré par le générateur tachymétrique.
